# EUROPEAN PATENT APPLICATION

(11) **EP 1 111 519 A1**
(43) Date of publication of application: **27.06.2001**
(21) Application number: 00311514.4
(22) Date of filing: 21.12.2000
(51) Int. Cl.: G06F 17/30

(54) **System and method for distributing an identification code of a web page together with a printed publication or a television broadcast**

(30) Priority: 21.12.1999 JP 36293299
(71) Applicant: TOKYO KIKAI SEISAKUSHO LTD., Tokyo (JP)
(72) Inventor: Shiba, Yoshikazu, Tokyo (JP); Miyauchi, Cyuuji, c/o Tohki Electronics Co., Ltd., Tokyo (JP)
(74) Representative: Watkin, Timothy Lawrence Harvey

(57) **Abstract**

An information service is disclosed comprising an identification code transmitted by mass media, together with primary information, and secondary information having a content relevant to the primary information. The secondary information is published (i.e. made public) on a Web site, with the same identification code as that attached to the primary information. The secondary information is automatically acquired through auto-piloting, using the identification code transmitted together with the primary information as a clue.

## Description

The present invention relates to a system and method for providing information to complement mass communication by media, in which messages to be conveyed in one-way communication via publication and broadcasting, for example, tend to be limited to mere summarization of events due to various conditions.

Information service and communication activities by media, as represented by newspapers, for example, are characterized by openness, simultaneity, immediacy and information providers' initiatives, and are carried out by information providers in the form of unilateral and arbitrary distribution of massive amounts of information addressed to an unspecified number of people.

On the Internet, a communication network that has been rapidly growing in recent years, on the other hand, communications using characters, images including moving images, and voice have been made possible through the World Wide Web (WWW), and all the information published at a Web site can be accessed and acquired by any one who need it through home pages, for example.

On the Internet, also provided is a program feature (auto log-in) of automatically executing the procedures of calling up the service provider and starting using a service ( a work session) on the Net (log-in), or a program feature (auto pilot) of automatically executing the procedures ranging from starting the use of a service after calling up the service provider to cutting off connection (log-out) at the end of the service use. The use of the auto-pilot feature, in which search conditions and output commands have been registered, allows the user to automatically read any particular piece of the information published at a Web site.

The contents of information disseminated via mass media, meanwhile, have often been limited to a mere "summary of events" because of limitations in the space and time available for publishing a wide variety and large amount of information, and information has seldom been made public in-depth. The immediacy and simultaneity required for dissemination of information has often limited the depth of information only to the "outset and nodes" of an event, rather than a continuous flow of information as to the whole course of the event. As a result, information recipients have not always been satisfied with the depth and continuity of information provided.

Any one who wants to find some piece of information in the Internet has heretofore had to search for a particular piece of information he wants to have among a mass of information published on the Internet. The difficulty in setting search conditions to get the aimed information has required the user to have some degree of experience and knowledge. Furthermore, sorting out the aimed-at information from among a vast amount of information falling within the category narrowed down by means of search conditions has been troublesome and time-consuming.

Auto log-in or auto pilot function, if ever available, can only serve for alleviating the difficulties associated with terminal operations.

It would be advantageous to provide an information providing system that allows a user who wants to have information to gain access to the aimed-at information without effort and in a short period of time, and makes detailed information available at relatively low cost when providing more detailed information, thereby eliminating the aforementioned dissatisfaction on the part of recipients of information supplied by mass media.

It would also be advantageous to provide an information providing system that makes available quickly and easily more detailed information from mass media, such as publishing as represented by newspapers and broadcasting as represented by television and radio, that are characterized of an arbitrary and unilateral flow of primary information.

It would also be advantageous to provide an information providing system that makes available more detailed secondary information on the basis of identification codes attached to primary information.

It would also be advantageous to provide a Web site on which secondary information having a more specific content than that of primary information, to which the same identification code as that of the primary information is attached, is made public.

It would also be advantageous to provide an information providing system from which a piece of secondary information can be found via auto pilot, and automatically acquired through downloading.

It would also be advantageous to provide an information providing system in which ancillary codes such as classification on the details of secondary information published on a Web site, the date of publication or broadcasting of the secondary information are attached to the secondary information, so that other information relating to the secondary information can be acquired on the basis of the ancillary codes.

It would also be advantageous to provide an information providing method of allowing a user who wants to have information to gain access to the aimed-at information without effort and in a short period of time, and making detailed information available at relatively low cost when providing more detailed information to eliminate the aforementioned dissatisfaction on the part of recipients of information supplied by mass media.

It would also be advantageous to provide an information providing method of making available more detailed secondary information on the basis of identification codes attached to primary information.

The present invention seeks to address some or all of the above objectives.

In general terms, the present invention proposes an information providing system which comprises an identification code transmitted by mass media, together with primary information that is made public on a Web site, and secondary information having a content relating to the primary information, to which the same identification code as that of the primary information is attached, so that the secondary information made public on the Web site can be automatically acquired via auto pilot on the basis of the identification code transmitted, together with the primary information.

FIG. 1 is a diagram illustrating an information providing system embodying the present invention.

FIG. 2 is a diagram of assistance in explaining another embodiment on how to attach an identification code to secondary information made public on a Web site.

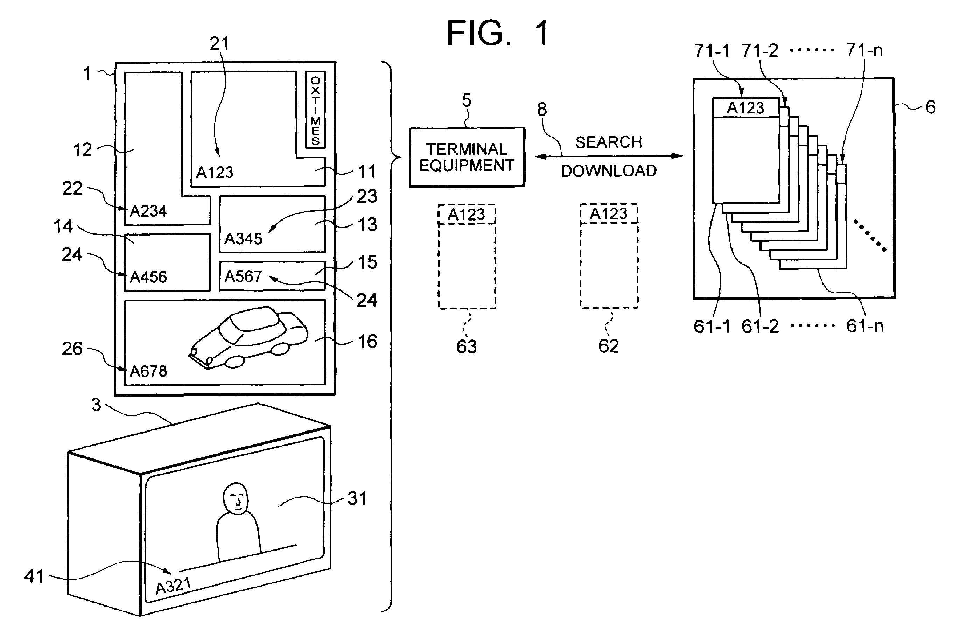

FIG. 1 is a diagram illustrating an information providing system embodying the present invention.

In the figure, the information providing system comprises pieces of primary information 11 through 16 and 31, to which identification codes 21 through 26 and 41 having distinguishing codes "A123,""A234," --- "A678" and "A321" are attached, and pieces of secondary information 61-1, 61-2, --- 61-n associated with the primary information made public on the Web site, to which identification codes 71-1, 71-2, ---71-n having the same distinguishing codes as those of the aforementioned identification codes 21 through 26 and 41 are attached.

The identification codes 21 through 26 and 41 attached to the pieces of primary information 11 through 16 and 31 are such that different identification codes 21 through 26 are attached to the pieces of information 11 through 16 relating to events whose contents are different. If the pieces of information 11 and 31, for example, have contents relating to the same event, the same identification codes 21 and 41 may be attached to them, regardless of the type of mass media used to communicate them. Needless to say, it is not always necessary to attach identification codes to each and every piece of information to be communicated.

The pieces of secondary information 61-1, 61-2, --- 61-n associated with the pieces of primary information 11 through 16 and 31 comprise information more specifically commenting on the events dealt with by the pieces of primary information 11 through 16 and 31; information commenting on terms used in the primary information; and information containing more specific contents than those of the pieces of primary information 11 through 16 and 31, in which a continual comment on changes with time in the state of the events in the primary information is made public in the forms of images, including characters and moving images, and voice.

These pieces of secondary information are made public in the area of the Web site 6, in which a person who wants to have information (hereinafter referred to as "information user") carries out a search for that information, together with the identification codes 71-1, 71-2, --- 71-n having the same discriminating codes as those of the identification codes 21 through 26 and 41 attached thereto.

With the above construction, a person who received the pieces of primary information 11 through 16 and 31 via mass media 1 or 3 and wants to have more specific details of the pieces of primary information 11 through 16 and 31 also acquires the identification codes 21 through 26 and 41 attached to the pieces of primary information 11 through 16 and 31 from the mass media 1 or 3.

Using the identification codes 21 through 26 and 41 acquired from each of the pieces of primary information 11 through 16 and 31 as search conditions, he has the auto pilot function execute a search of the Web site 6 through an appropriate terminal equipment 5 connected to the Web site 6 via a public telecommunications line 8.

Since the identification codes 71-1, 71-2, --- 71-n having the same discriminating codes as those of the identification codes 21 through 26 and 41 of the relevant pieces of primary information 11 through 16 and 31 are attached to the pieces of secondary information 61-1, 61-2, --- 61-n, a person who wants to have the pieces of secondary information 61-1, 61-2, --- 61-n, that is, an information user can find an aimed-at pieces of secondary information 62 in a very short period of time. By registering a download instruction in the auto pilot function, the user can download the found pieces of secondary information 62, and acquire it as a downloaded pieces of secondary information 63.

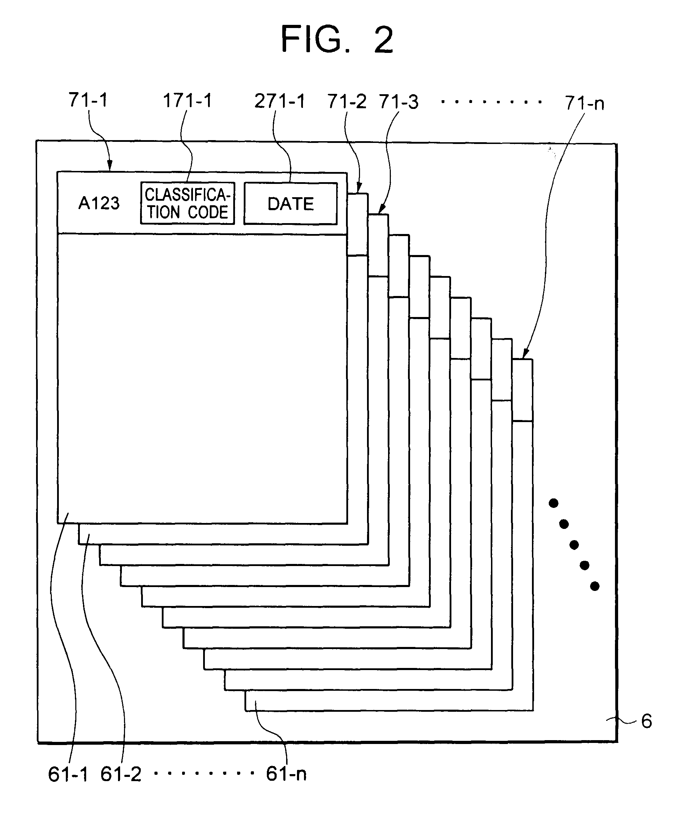

FIG. 2 shows another embodiment as to how to attach identification codes to the secondary information made public on a Web site.

In the figure, classifications on the contents of the pieces of secondary information 61-1, 61-2, --- 61-n, such as a classification code 171-1 like an International Patent Classification, and date 271-1 representing the date of publication, issue or broadcast, or a deadline in some cases, are attached to the identification codes 71-1, 71-2, --- 71-n of the pieces of secondary information 61-1, 61-2, --- 61-n made public on the Web site 6, in addition to the discriminating codes "A123," "A234," --- "A678" as those indicated by the identification codes 21 through 26 and 41 in FIG. 1. A major classification and a plurality of sub classifications, as necessary, are attached to the classification code 171-1 in accordance with the contents of the secondary information.

Since at least the classification code 171-1 as the major classification and the date 271-1 are attached to the identification codes 71-1, 71-2, --- 71-n of the pieces of secondary information 61-1, 61-2, --- 61-n, in addition to the discriminating codes !A123," "A234," --- "A678," an information user who wants to have the pieces of secondary information 61-1, 61-2, --- 61-n can acquire other information associated with the piece of secondary information 62 from the piece of secondary information 63 he found and downloaded in the following manner.

That is, since the classification code 171-1 having at least a major classification, and a plurality of sub classifications, and the date 271-1 are attached to the secondary information 63, in addition to the discriminating codes "A123" represented by the identification code 21, an appropriate terminal equipment 5 connected to the Web site 6 via the public telecommunications line 8 is caused by the auto pilot function to carry out a search of the Web site 6 using as search conditions the classification code 171-1 of the identification code 21 obtained from the secondary information.

Since the classification code 171-1 and the date 271-1 are attached to the pieces of secondary information 61-1, 61-2, --- 61-n made public on the Web site shown in FIG. 2, in addition to the discriminating codes "A123," "A234," --- "A678" as identification codes, an information user who wants to have other information associated with the secondary information 62 can acquire other secondary information associated with the secondary information 62 in a very short period of time. And by registering a download instruction in the auto pilot function, he can download the other secondary information associated with the found secondary information 62, and acquire it as the downloaded secondary information.

An example where the auto pilot function is caused to execute a search of the Web site 6 using as search conditions the classification code 171-1 as an identification code has been described in the foregoing. In order to obtain other secondary information associated with the piece of secondary information 62, to identify a specific date, for example, the auto pilot function is caused to execute a search of the Web site using the date 271-1 as a search condition, together with the classification code 171-1 as an identification code.

As shown in FIG. 2, by attaching classification codes relating to the contents of secondary information made public on the Web site 6, and the date of publication, issue or broadcast, or deadline in some cases to identification codes for the secondary information, the user can easily and quickly acquire secondary information associated with the secondary information 62 from the downloaded secondary information 63 of the found and acquired secondary information 62.

As described above, the present invention, in which identical identification codes are attached to primary information provided and distributed by mass media and secondary information associated with the primary information, and the secondary information is made public on a Web site in which an auto pilot function can be used so as to simplify the procedures required for an information recipient of the primary information, that is, an information user to acquire the secondary information associated with the primary information, makes it possible for the information user to automatically search for the secondary information in a short period of time and automatically download the aimed secondary information.

In providing secondary information, the present invention, in which the information user can acquire the secondary information in a short period of time, can offer the secondary information at a relatively low cost, thus reducing the cost burden on the information user.

Furthermore, since the information user can obtain the secondary information using the auto pilot function, the user's access time to the Web site can be reduced to the required minimum, thus minimizing the congestion of accesses to the Web site.

## Claims

1. An information providing system comprising identification codes transmitted by mass media, together with primary information, and secondary information having contents associated with the primary information made public on a Web site, to which identification codes identical to the identification codes transmitted together with the primary information are attached, characterized in that
the secondary information made pubic on the Web site can be automatically acquired by an auto pilot using as a clue the identification codes transmitted together with the primary information.

2. An information providing system according to claim 1 wherein the mass media are publication as represented by newspapers, and broadcasting as represented by television and radio.

3. An information providing system according to claim 1or claim 2 wherein the identification codes transmitted together with the primary information are different from each other in cases where the contents of the primary information are concerned with mutually different events, and are identical to each other, regardless of the type of mass media, in cases where the contents of the primary information are concerned with an identical event with each other.

4. An information providing system according to any preceding claim wherein the secondary information is information containing more specific contents than the primary information, such as information commenting in more detail on the events contained in the primary information, information explaining terminology, etc. contained in the primary information, information having more specific contents than those of the primary information, that is a continual comment of changes with time in the state of events contained in the primary information, made public in the form of images, including characters and moving images, and voice.

5. An information providing system according to any preceding claim wherein the secondary information to which identification codes identical to the identification codes of the primary information are attached is made public in an area of the Web site where a person who wants to have information makes a search.

6. An information providing system according to any preceding claim wherein a download instruction is registered in the auto pilot, so that the secondary information found in a search can be downloaded and acquired as downloaded secondary information.

7. An information providing system according to any preceding claim wherein classifications on the contents of the secondary information and the date of publication, issue, or broadcast, or deadline as the case may be, are attached to the secondary information made public on the Web site, in addition to the identification codes identical to the identification codes of the primary information.

8. An information providing system according to any preceding claim wherein the classifications has a major classification and a plurality of sub classifications as necessary, depending on the contents of the secondary information.

9. An information providing system according to any preceding claim wherein international patent classification codes are used as the classifications.

10. An information providing method characterized in that
identification codes are transmitted via mass media, together with primary information,
secondary information associated with the primary information, to which identification codes identical to the identification codes of the primary information are attached, are made public on a Web site,
so that the secondary information made public on the Web site can be automatically acquired via auto pilot using as a clue the identification codes transmitted together with the primary information.
11. An information providing method according to claim 10 wherein classifications comprising at least a major classification and a plurality of sub classifications, and dates are attached to the secondary information, together with the identification codes of the secondary information, and a search of the Web site is carried out by an auto pilot function using as search conditions the classification codes of the identification codes obtained from the secondary information in terminal equipment connected to the Web site via a public telecommunications line.
